# EUROPEAN PATENT SPECIFICATION

(11) **EP 4 280 351 B1**
(45) Date of publication and mention of the grant of the patent: **25.12.2024**
(21) Application number: 21967628.5
(22) Date of filing: 15.12.2021
(51) Int. Cl.: H01M 50/102, H01M 50/152, H01M 50/213, H01M 50/264, H01M 50/463

(54) **BATTERY, POWER CONSUMING APPARATUS, AND MANUFACTURING METHOD FOR BATTERY**
BATTERIE, STROMVERBRAUCHENDE VORRICHTUNG UND HERSTELLUNGSVERFAHREN FÜR DIE BATTERIE
BATTERIE, DISPOSITIF CONSOMMATEUR ÉLECTRIQUE ET PROCÉDÉ DE FABRICATION DE BATTERIE

(43) Date of publication of application: 22.11.2023
(73) Proprietor: Contemporary Amperex Technology (Hong Kong) Limited, Central, Central And Western District (HK)
(72) Inventor: JI, Hongye, Ningde, Fujian 352100 (CN); QIN, Feng, Ningde, Fujian 352100 (CN); WANG, Peng, Ningde, Fujian 352100 (CN); WANG, Zhi, Ningde, Fujian 352100 (CN); HE, Runyong, Ningde, Fujian 352100 (CN); FANG, Zhengyu, Ningde, Fujian 352100 (CN)
(74) Representative: von Tietzen und Hennig, Nikolaus
(86) International application number: PCT/CN2021/138410
(87) International publication number: WO 2023/108491

(56) References cited:
- EP-A1- 2 530 778
- CN-A- 103 538 455
- CN-A- 103 855 341
- CN-A- 103 855 341
- CN-A- 106 099 213
- CN-U- 206 040 770
- CN-U- 206 040 770
- DE-A1- 102015 104 741
- JP-A- 2002 184 374
- US-A1- 2009 297 892
- US-A1- 2010 136 405

## Description

### Technical Field

The present application relates to the field of power batteries, and in particular to a battery, a power consuming apparatus, and a method for manufacturing a battery.

### Background Art

Information provided in this section is only background information related to the present application, which is not necessarily the prior art.

With continuous updating and market promotion of a battery technology, batteries with a high energy density have been widely used in a wide range of fields, such as electric vehicles and ships. A plurality of battery cells are packaged in a case of each of some batteries in the related art. Batteries will inevitably collide during transportation, and there will also be a risk of collision after the batteries are mounted on a fixed apparatus. The cases of the batteries in the related art are prone to deformation during collision, which is likely to cause displacement or damage of internal battery cells.

Each of US 2009/297892 A1, CN 206 040 770 U and JP 2002 184374 A disclose a battery module consisting of several rows of battery cells. The casing of the modules comprises top and base portions which are connected to each other via screws and rigid elements.

### Summary of the Invention

An objective of the present application is to provide a battery, a power consuming apparatus, and a method for manufacturing a battery, so as to improve an anti-collision capability of a case of the battery, thereby reducing a risk of displacement or damage of a battery cell due to collision of the battery. The specific technical solution is as follows.

A first aspect of the present application provides a battery with the features of claim 1. The battery includes a case, at least one row of battery cells, and a support member, where an accommodation space is formed inside the case, the at least one row of battery cells is arranged in the accommodation space, each row of battery cells includes at least two battery cells arranged opposite each other in a first direction, the support member extends in the first direction, and two ends of the support member are fixed to the case.

According to the battery of the present application, the support member is arranged in the case of the battery, and an extending direction of the support member is the same as that of one row of battery cells, such that interference between the support member and the battery cell can be avoided. The two ends of the support member are fixed to the case, and structural stiffness and structural strength of the case can be improved by means of a supporting effect of the support member, thereby improving the anti-collision capability of the case, and reducing the risk of displacement or damage of the battery cell due to collision of the battery.

In some embodiments, a shell of the battery cell is cylindrical, and two or more rows of battery cells are arranged, where in a second direction, a first gap is formed between the shells of two adjacent rows of battery cells, and the support member is arranged in the first gap. In order to increase an energy density of the battery, two or more rows of battery cells can be provided, the shell of the battery cell is cylindrical, when the battery cells are closely arranged, the first gap is inevitably formed between the shells of two adjacent rows of battery cells, and the support member is arranged in the first gap, such that the energy density of the battery cannot reduced, and the anti-collision capability of the battery can be improved.

In some embodiments, a shell of the battery cell is cylindrical, a second gap is formed between the shell of the battery cell and a side wall of the case, and the support member is arranged in the second gap. The shell of the battery cell is cylindrical, the second gap is inevitably formed between the cylindrical shell and the side wall of the case, and the support member is arranged in the second gap, such that other spaces of the battery are not occupied, the energy density of the battery cannot be reduced, and the anti-collision capability of the battery can be improved.

In some embodiments, a shell of the battery cell is cylindrical, and two or more rows of battery cells are provided, where in a second direction, a first gap is formed between the shells of two adjacent rows of battery cells, and a second gap is formed between the shell of the battery cell and a side wall of the case, and where a plurality of support members are provided, some of the support members are arranged in the first gap, and the other support members are arranged in the second gap. The shell of the battery cell is cylindrical, and in order to increase the energy density of the battery, two or more rows of battery cells can be provided in a height direction of the battery. In the case, the battery cells are closely arranged, and it is inevitable that the first gap is formed between an upper row and a lower row of battery cells, and that the second gap is formed between the battery cell and the case. Some of the support members are arranged in the first gap, while the other support members are arranged in the second gap, such that the energy density of the battery cannot be affected, and better support can further be provided for the case, thereby obviously improving the anti-collision performance of the case.

In some embodiments, the battery further includes a separator, where two or more rows of battery cells are provided, in a second direction, the separator is arranged between two adjacent rows of battery cells, and in a third direction, the support members are arranged at intervals on two sides of the separator. The separator is added into the battery, such that on one hand, positions of the plurality of battery cells that are stacked can be fixed, and on the other hand, a heat dissipation area of the separator is large, and a material having excellent heat conduction may also be used to help heat dissipation. In addition, in the third direction, the support members are arranged on the two sides of the separator, such that support points are distributed more reasonably.

In some embodiments, in the third direction, the support member is arranged between every three of the battery cells on one side of the separator. This design can improve stiffness of the battery, reduce use of materials, and also satisfy requirements of lightweight of the battery.

According to the invention, the support member includes a support rod and a base located at an end of the support rod, where the base is connected to the side wall of the case. A rod-shaped structure of the support rod is more suitable for being arranged in a narrow space in the first gap and the second gap, the support rod has high axial strength, providing a better support for the side wall of the case, and the support rod is provided with the base at its end, such that when the base is connected and fixed to the side wall of the case, the base is suitable for various fixing manners.

According to the invension, an adhesive surface is formed on the base, and the adhesive surface abuts against the side wall of the case and is connected to the side wall by means of gluing. This design can fix the base on the side wall of the case better; moreover, a mounting method is simple, material cost is low, the requirement of lightweight of the battery is satisfied, and the battery is easy to operate when assembled.

In some embodiments, the support rod is of a circular tube structure. The circular tube structure has small mass, thereby reducing whole weight of the battery, and the circular tube structure can provide a support force and can absorb energy through collapse.

In some embodiments, the support rod and the base are of a structure integrally formed, or the support rod is detachably connected to the base. The structure integrally formed by the support rod and the base is connected more stably, efficiency of assembling the battery is higher, and the support member can be mounted while the battery cell is assembled; and the detachable structure is more flexible during mounting, such that the support rod and the base can be synchronously arranged during laying of the battery, or after mounting of the battery is completed, the support rod can be inserted, and then the base is mounted. Moreover, the support rod and the base are easier to manufacture, which is beneficial to reduce production cost.

In some embodiments, the support member is made of a metal material, and an insulating layer is provided on a surface of the support member. The material of the support member made of a metal material is easy to produce and process, such that the production cost is low. The obtained material has high strength. The surface is provided with the insulating layer to prevent short circuit of the battery.

In some embodiments, in the first direction, the battery cell includes end caps at two ends, where the end cap includes a terminal post, and the terminal posts of adjacent battery cells are connected in series. The end cap is made of a material having hardness and strength to some extent, and the end cap is not prone to deformation when subjected to compression and collision, such that the battery cell can have a higher structural strength, and safety performance can also be improved. A voltage of the battery is increased by connecting the battery cells in series by means of the terminal posts.

In a second aspect, the present application provides a power consuming apparatus. The power consuming apparatus includes a battery in any of embodiments of the first aspect described above, where the battery is configured to supply electric energy to the power consuming apparatus.

According to the power consuming apparatus of an embodiment of the present application, the support member is arranged in the case of the battery of the power consuming apparatus, and an extending direction of the support member is the same as that of one row of battery cells, such that interference between the support member and the battery cell can be avoided. The two ends of the support member are fixed to the case, and structural stiffness and structural strength of the case can be improved by means of a supporting effect of the support member, thereby improving the anti-collision capability of the case, and reducing the risk of displacement or damage of the battery cell due to collision of the battery.

In a third aspect, the present application provides a method for manufacturing a battery according to the first aspect described above. The method includes:

providing a case, at least one row of battery cells, and a support member, where an accommodation space is formed inside the case, the at least one row of battery cells is arranged in the accommodation space, each row of battery cells includes at least two battery cells arranged in a first direction, the support member extends in the first direction, and two ends of the support member are fixed to the case.

By means of the method for manufacturing a battery of an embodiment of the present application, the support member is arranged in the case of the battery manufactured, and an extending direction of the support member is the same as that of one row of battery cells, such that interference between the support member and the battery cell can be avoided. The two ends of the support member are fixed to the case, and structural stiffness and structural strength of the case can be improved by means of a supporting effect of the support member, thereby improving the anti-collision capability of the case, and reducing the risk of displacement or damage of the battery cell due to collision of the battery.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

In order to more clearly illustrate the technical solutions in the embodiments of the present application or in the prior art, the accompanying drawings required in the description of the embodiments or in the prior art will be briefly described below. Obviously, the accompanying drawings described below are merely some embodiments of the present application, and for those of ordinary skill in the art, other embodiments can be obtained from these accompanying drawings, in which:
FIG. 1 is a schematic structural diagram of a vehicle using a battery of an embodiment of the present application;
FIG. 2 is a schematic diagram of a battery in an embodiment;
FIG. 3 is a schematic structural diagram of a battery of some embodiments of the present application;
FIG. 4 is a schematic structural diagram of a battery of some embodiments of the present application with a case removed;
FIG. 5 is a schematic diagram of distribution of support members in a battery of some embodiments of the present application;
FIG. 6 is a schematic diagram of distribution of support members in a battery of some other embodiments of the present application;
FIG. 7 is a schematic diagram of distribution of support members in a battery of yet some embodiments of the present application;
FIG. 8 is a schematic structural diagram of a support member of some embodiments of the present application;
FIG. 9 is a partially enlarged schematic diagram of the support member shown in FIG. 8;
FIG. 10 is a partial schematic diagram of a support member of an alternative configuration not covered by the claims; and
FIG. 11 is a schematic structural diagram of a battery cell of some embodiments of the present application.

### Reference signs are as follows:

Vehicle 1, Battery 10, Controller 30, Motor 40;
Case 100, Upper cover 101, Housing 102;
Battery cell 200, Shell 210, End cap 220, Terminal post 230;
Support member 300, Support rod 310, Base 320, Connection hole 321;
First gap 400, Second gap 500, Separator 600.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

At present, from the perspective of a market situation, a battery is increasingly widely used. The battery is not only applied to an energy storage power system such as hydropower, firepower, wind power and solar power stations, but also widely applied to the field of new energy vehicles, military equipment, etc. As battery application scenarios becomes increasingly complex, more attention should be paid to safety of the battery. An anti-collision capability is extremely important during transportation and use of the battery.

The inventor have noticed that, as the requirement for an overall energy density of the battery becomes increasingly high, a technology of directly arranging battery cells in a case of the battery is increasingly widely applied. According to such a group technology, related structures of a module is omitted, structural arrangement of a cross beam in the case is omitted, and more battery cells may be arranged in a limited space, thereby increasing a volume energy density. However, in such a group technology, a conventional housing of a case is used, and a capability to resist transverse external force impact is weak. After being impacted, the housing is often likely to deformation or damage and invades an interior of the battery, which will cause pressing damage and dislocation of the internal battery cells, failure of a connector, etc., and even cause the problem of short circuit and fire. If only strength of the case housing is considered to be improved to protect the battery, it is necessary to make an additional reinforcement structure for the case, which compromises increase in the energy density to some extent.

In order to improve the above problem, the inventor's research found that in a battery group technology, due to a shape of a shell of the battery cell, there is a certain amount of redundant space between adjacent battery cells when the battery cells are arranged into a group. For example, when the battery cell is cylindrical, there is a redundant space due to curved side walls between cylindrical shells of adjacent battery cells. When the battery cell is in a prism shape having more than four edges, or when sizes and shapes of the battery cells are different, there is also such a redundant space.

The redundant space inevitably exists due to the shape of the shell of the battery cell. The inventor's research found that a support component is provided inside the case of such a battery to increase a transverse support force, thereby enhancing stiffness of the case of the battery, improving the anti-collision capability of the case of the battery, and then reducing a risk of displacement or damage of the battery cell due to collision of the battery.

The battery disclosed in the embodiment of the present application may be used in, but not limited to, a power consuming device such as a vehicle, a ship or an aircraft. The power consuming device may be, but not limited to, a mobile phone, a tablet, a notebook computer, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

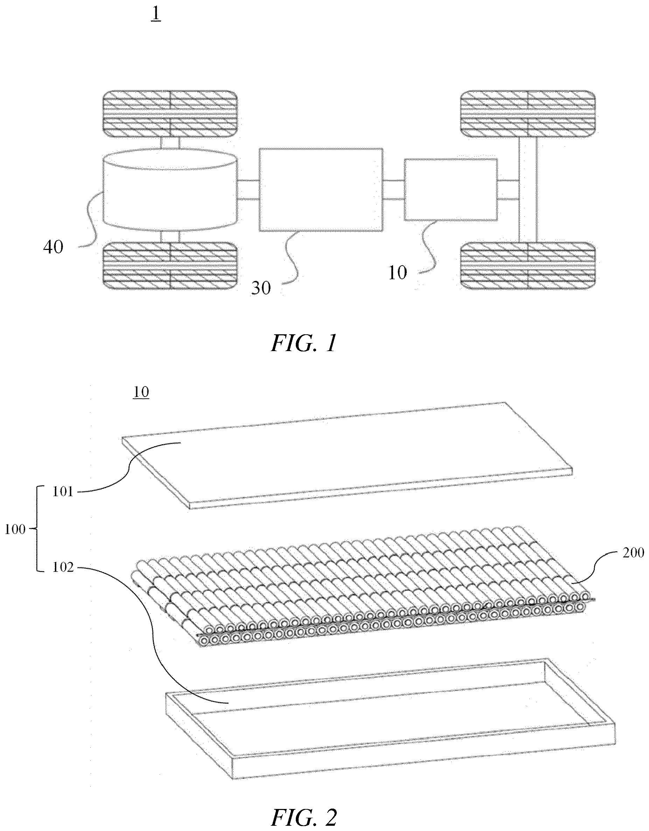

As shown in FIG. 1, which is a schematic structural diagram of a power consuming apparatus, i.e., a vehicle 1, using a battery of an embodiment of the present application, the vehicle 1 may be a fuel oil vehicle, a gas vehicle or a new energy vehicle. The new energy vehicle may be a battery electric vehicle, a hybrid vehicle or an extended-range vehicle, etc. A motor 40, a controller 30 and a battery 10 may be provided inside the vehicle 1. The controller 30 is configured to control the battery 10 to supply power to the motor 40. For example, the battery 10 may be arranged at a bottom, a head or a tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

As shown in FIG. 2, the battery 10 mentioned in the embodiment of the present application refers to a single physical module that includes one or more battery cells 200 to supply higher voltage and capacity. For example, the battery 10 mentioned in the present application may include a battery module or a battery pack, etc. The battery 10 generally includes a case 100 for packaging one or more battery cells 200. The case 100 may prevent a liquid or other foreign objects from affecting charging or discharging of the battery cell. Specifically, the case 100 may include an upper cover 101 and a housing 102, where the upper cover 101 and the housing 102 are snap-fitted together. The upper cover 101 and the housing 102 may be shaped depending on a shape of a combination of the plurality of battery cells 200.

The plurality of battery cells 200 may be connected in series and/or in parallel by means of terminal posts for various application scenarios. In some high-power application scenarios such as an electric vehicle, the use of the battery includes three levels: a battery cell, a battery module and a battery pack. The battery module is formed by electrically connecting a certain number of battery cells together and putting the battery cells into a frame in order to protect the battery cells from external shocks, heat, vibration, etc. The battery pack is a final state of a battery system mounted in the electric vehicle. The battery pack generally includes a case configured to package one or more battery cells. The case may prevent the liquid or other foreign objects from affecting charging or discharging of the battery cell. The case is generally formed by a cover and a housing. Most of the current battery packs are manufactured by assembling various control and protection systems such as a battery management system (BMS) and a thermal management component on one or more battery modules. With the development of technologies, the level of the battery module may be omitted. That is, the battery pack is directly formed by the battery cells. With this improvement, the number of parts is remarkably reduced while a weight energy density and a volume energy density of the battery system are improved. The battery mentioned in the present application includes a battery module or a battery pack.

In the present application, the battery cell 200 may include a lithium-ion secondary battery, a lithium-ion primary battery, a lithium-sulfur battery, a sodium lithium-ion battery, a sodium-ion battery or a magnesium-ion battery, etc., which is not limited in the embodiment of the present application. The battery cell may be cylindrical, flat, cuboid , prismatic or other shapes, which is also not limited in the embodiment of the present application. The battery cells are generally classified into three types depending on the way of package: cylindrical battery cells, prismatic battery cells and pouch battery cells, which is also not be limited in the embodiment of the present application.

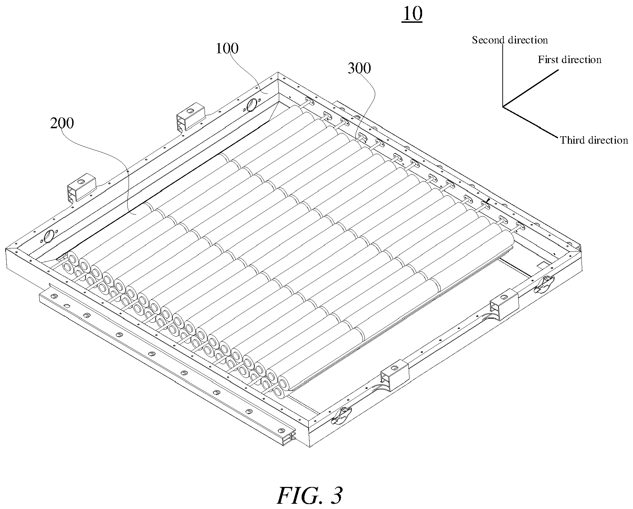

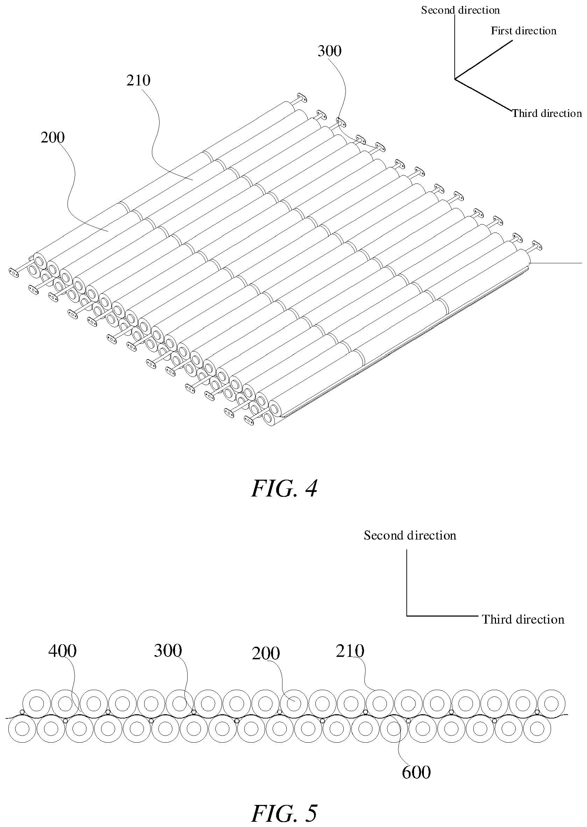

As shown in FIGS. 3 and 4, a first aspect of the present application provides a battery 10. The battery 10 includes a case 100, battery cells 200 and a support member 300. Specifically, an accommodation space is formed inside the case 100, at least one row of battery cells 200 is provided, the at least one row of battery cells 200 is arranged in the accommodation space, each row of battery cells 200 includes at least two battery cells 200 arranged opposite each other in a first direction, the support member 300 extends in the first direction, and two ends of the support member 300 are fixed to the case 100.

The battery cell 200 is a minimum unit forming the battery, and the battery cell 200 may include an end cap, a shell, a cell assembly, and other functional components, such as an insulating layer. The end cap refers to a component that covers an opening of the shell to isolate an internal environment of the battery cell from an external environment, the shell is a component configured to accommodate an electrode assembly, so as to form the battery cell, and the shell internally further includes an electrolyte and other components. The shell may be made of various materials, such as iron, aluminum, stainless steel, etc., and the electrode assembly is a component in which an electrochemical reaction occurs in the battery cell. The shell may internally include one or more electrode assemblies. The electrode assembly is mainly formed by winding or stacking a positive electrode plate and a negative electrode plate, and a separator is usually provided between the positive electrode plate and the negative electrode plate.

The case 100 is an external structure configured to package the battery cell 200 and provide a protection effect for the battery cell. A space in the case 100 may be configured to arrange the battery cell 200 and other components required for the battery. The case 100 may be made of various materials, such as iron, aluminum, stainless steel, etc. Preferably, the case may be made of iron having excellent heat conduction and sufficient strength, which is not particularly limited in the embodiment of the present application. A shape of the case 100 may be designed according to actual use requirements, and in general, the case may be designed into a cuboid shape, such that the case is easier to transport and clamp and fix on a power consuming apparatus. Moreover, the cuboid case 100 is easier to stack during storage.

The first direction is a direction in which a row of battery cells is formed. That is, when at least two battery cells 200 are arranged opposite each other, an arrangement direction between the battery cells is the first direction. For example, when the plurality of battery cells 200 are connected in series, the first direction may be an arrangement direction of the plurality of battery cells 200 in a series state.

The support member 300 is a rigid structural member supported between two opposite side walls of the case 100, and may be a plastic member or a metal member having excellent stiffness. When the support member is a metal member, the support member may specifically be an iron structural member, an aluminum structural member, a stainless steel member or an alloy member, etc. The support member 300 extends in the first direction, and may be a long rod having a circular, elliptical or other sectional shape. The long rod may be a straight rod or a curved rod, and may have a single sectional shape or different sectional shapes, which are not particularly limited in the present application.

According to the battery 10 of the embodiment of the present application, the support member 300 is arranged in the case 100 of the battery, and an extending direction of the support member 300 is the same as that of one row of battery cells 200, such that interference between the support member 300 and the battery cell 200 can be avoided. The two ends of the support member 300 are fixed to the case 100, and structural stiffness and structural strength of the case 100 can be improved by means of a supporting effect of the support member 300, thereby improving the anti-collision capability of the case 100, and reducing the risk of displacement or damage of the battery cell due to collision of the battery.

According to some embodiments of the present application, with reference to FIGS. 4 and 5, a shell 210 of the battery cell 200 is cylindrical, and two or more rows of battery cells 200 are provided. In a second direction, a first gap 400 is formed between the shells 210 of two adjacent rows of battery cells 200, and the support member 300 is arranged in the first gap 400.

The second direction is a direction perpendicular to a first direction. In an optional example, the second direction may be, for example, a height direction of the battery 10. In this case, the first gap 400 configured to arrange the support member 300 is formed between an upper row and a lower row of battery cells 200. Certainly, in some other examples, the second direction may also be perpendicular to the height direction of the battery 10. In this case, the second direction is in a transverse plane of the battery 10 (which is perpendicular to the height direction of the battery 10), and in this case, the first gap 400 configured to arrange the support member 300 is formed between two adjacent rows of battery cells 200 located in the same transverse plane.

The shell 210 of the battery cell 200 in the embodiment of the present application is cylindrical, such that the battery cell 200 is a cylindrical battery. In order to increase an energy density of the battery 10, two or more rows of battery cells 200 can be provided in the height direction of the battery 10. In the case 100, the battery cells 200 are closely arranged, and since the shell 210 is cylindrical, the first gap 400 can be inevitably formed between an upper row and a lower row of battery cells 200. The support member 300 is arranged in the first gap 400, such that a support force can be provided to the case 100, and the energy density of the battery cannot be affected.

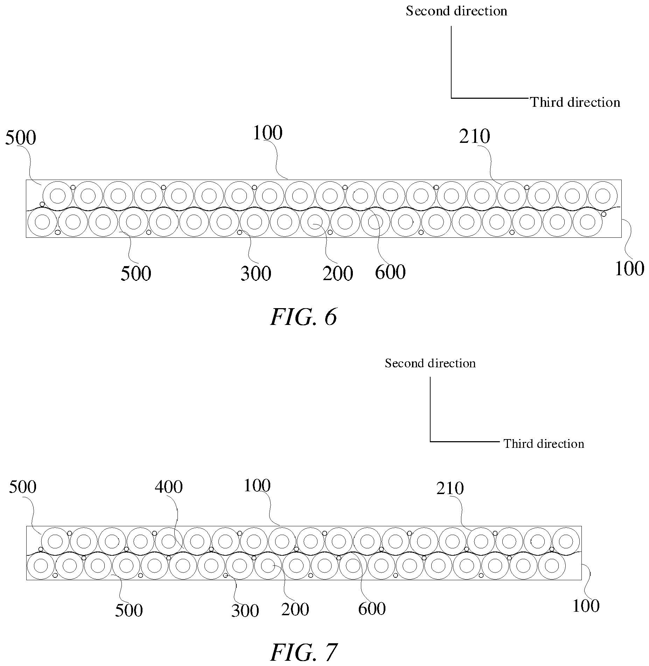

According to some embodiments of the present application, with reference to FIG. 6, a shell 210 of the battery cell 200 is cylindrical, a second gap 500 is formed between the shell 210 of the battery cell 200 and a side wall of the case 100, and the support member 300 is arranged in the second gap 500.

The shell 210 of the battery cell 200 in the embodiment of the present application is cylindrical, such that the battery cell 200 is a cylindrical battery. In order to increase an energy density of the battery 10, two or more rows of battery cells 200 can be provided in the height direction of the battery 10. In the case 100, the battery cells 200 are closely arranged, and since the shell 210 is cylindrical, the second gap 500 can be inevitably formed between the battery cell 200 and the case 100. The support member 300 is arranged in the second gap 500, such that a support force can be provided to the case 100, and the energy density of the battery cannot be affected.

According to some embodiments of the present application, with reference to FIG. 7, a shell 210 of the battery cell 200 is cylindrical, two or more rows of battery cells 200 are provided. In a second direction, a first gap 400 is formed between the shells 210 of the two adjacent rows of battery cells 200, and a second gap 500 is formed between the shell 210 of the battery cell 200 and a side wall of the case 100. A plurality of support members 300 are provided, some of the support members 300 are arranged in the first gap 400, and the other support members 300 are arranged in the second gap 500.

The shell 210 of the battery cell 200 in the embodiment of the present application is cylindrical, such that the battery cell 200 is a cylindrical battery. In order to increase an energy density of the battery 10, two or more rows of battery cells 200 can be provided in the height direction of the battery 10. In the case 100, the battery cells 200 are closely arranged, and since the shell 210 is cylindrical, the first gap 400 can be inevitably formed between an upper row and a lower row of battery cells 200, and the second gap 500 can be inevitably formed between the battery cell 200 and the case 100. Therefore, some of the support members 300 can be arranged in the first gap 400, while the other support members 300 can be arranged in the second gap 500. In this way, the energy density of the battery cannot be affected, and better support can further be provided for the case 100, thereby obviously improving the anti-collision performance of the case 100.

According to some embodiments of the present application, the battery 10 further includes a separator 600, where two or more rows of battery cells 200 are provided, in a second direction, the separator 600 is arranged between two adjacent rows of battery cells 200, and in a third direction, the support members 300 are arranged at intervals on two sides of the separator 600.

The third direction is perpendicular to the first direction and the second direction. That is, the third direction can be jointly determined on the basis of the first direction and the second direction. For example, when the first direction is a direction in which one row of the battery cells 200 is formed, and the second direction is the height direction of the battery 10, the third direction is in the transverse plane of the battery 10 (which is perpendicular to the height direction of the battery 10). When the first direction is a direction in which one row of battery cells 200 is formed, and the second direction is a direction perpendicular to the height direction of the battery 10, the third direction is in the height direction of the battery 10.

The separator 600 is a component arranged in the case 100 and configured to limit a position of the battery cell 200. The separator 600 is arranged between an upper row and a lower row of the battery cells 200, and can have a wavy shape, so as to be adapted to a shape of the battery cell 200. The separator 600 can be made of plastic or a metal material, etc. and when the separator 600 is made of the metal material, an insulating layer needs to be provided on a surface of the separator 600.

The battery cell 200 generates heat during use, and close arrangement of too many battery cells 200 can result in temperature superposition. The separator 600 is added into the battery 10, such that on one hand, positions of the plurality of battery cells 200 that are stacked can be fixed, and on the other hand, a heat dissipation area of the separator 600 is large, and a material having excellent heat conduction may also be used to help heat dissipation. In addition, in the third direction, the support members 300 are arranged on the two sides of the separator 600, such that support points are distributed more reasonably.

According to some embodiments of the present application, with reference to FIG. 5, in the third direction, the support member 300 is arranged between every three of the battery cells 200 on one side of the separator 600.

The support member 300 is arranged between every three of battery cells 200 on one side of the separator 600, and correspondingly, the support member 300 is also arranged between every three of the battery cells 200 on the other side of the separator 600. The support members 300 on two sides of the separator 600 are arranged in a staggered manner. This design can reduce use of materials of the support members 300 on the premise of ensuring uniformity of support points of the support members 300, and also reduce weight of the battery 10.

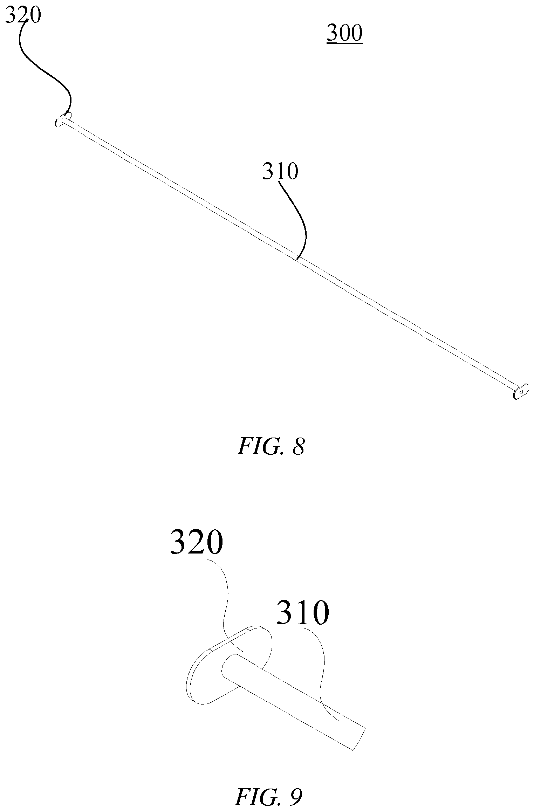

According to the invention, with reference to FIGS. 3, 4, 8 and 9, the support member 300 includes a support rod 310 and a base 320 located at an end of the support rod 310, where the base 320 is connected to the side wall of the case 100.

The support rod 310 is of a main body structure of the support member 300, which is an elongated rod-shaped structure. The base 320 is a connection portion of the support member 300 that is configured to be connected to the case 100, and is arranged at either end of the support rod 310. A shape of the base 320 can be circular, elliptical, square, etc., which is not limited in the embodiment. The support rod 310 and the base 320 can be made of materials having strength to some extent, such as plastic or metal, so as to provide a support force in the first direction.

The support member 300 includes the support rod 310 and the base 320. The support rod 310 can be better adapted to a narrow space in the case 100, and especially to the first gap 400 and/or the second gap 500. The support rod 310 has high axial (first direction) strength, providing a better support for the side wall of the case 100, and the support rod 310 is provided with the base 320 at its end, such that when the base is connected and fixed to the side wall of the case 100, the base is suitable for various fixing manners.

According to the invention, an adhesive surface is formed on the base 320, and the adhesive surface abuts against the side wall of the case 100 and is connected to the side wall by means of gluing.

The adhesive surface is a viscous mounting surface that may be connected to the case 100 by applying an adhesive.

The adhesive surface is used to fix the base 320 to the side wall of the case 100, such that efficiency of assembling the battery is high. Moreover, other connection components are not added, such that the requirement of lightweight of the battery is satisfied, and material cost is low.

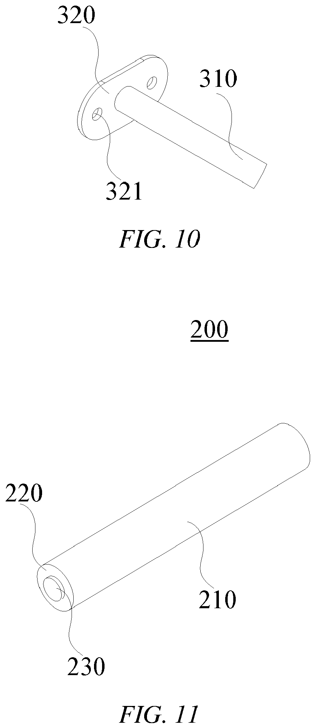

According to an alternative configuration not covered by the claims, with reference to FIG. 10, a connection hole 321 is provided in the base 320, and the base 320 is connected to the side wall of the case 100 by means of a connector passing through the connection hole 321.

The connection hole 321 is provided in the base 320, and the side wall of the case 100 is provided with a connection hole 321 at a position corresponding to a position of the connection hole 321 in the base 320. The connector pass through the connection hole 321 in the base 320 and the connection hole 321 in the side wall of the case 100 and fixes the base 320 and the case 100. The connector may be a bolt, a rivet, etc.

A fixing manner of the connector passing through the connection holes 321 is used, and a wide range of connectors may be selected with more stable fixing, such that it is not easy to fall off and cause damage to an interior of the battery.

According to some embodiments of the present application, the support rod 310 is of a circular tube structure.

A hollow circular tube has light weight, high axial structural strength, a mature processing technology and low material cost. A hollow circular tube structure can strengthen structural strength of the case 100 of the battery by means of structural strength of the hollow circular tube structure. Moreover, when encountering strong instantaneous impact, the hollow circular tube structure can also absorb energy through the collapse of the hollow tube structure for protecting the battery.

According to some embodiments of the present application, the support rod 310 and the base 320 are of a structure integrally formed.

The support rod 310 and the base 320 are of the structure integrally formed, such that efficiency of assembling the battery is high, and connection is stabler. When the battery is assembled, the support member 300 can be mounted while the battery cells 200 are assembled.

According to some embodiments of the present application, the support rod 310 is detachably connected to the base 320.

The support rod 310 is detachably connected to the base 320, and the support rod 310 is connected to the base 320 by means of snap-fit, threaded connection, gluing, welding or connection by using a connector, etc. If the support rod and the base are made of plastic materials, hot melt connection can also be used, which is not limited in the embodiment. The support rod 310 is detachably connected to the base 320, such that during assembly of the battery, an assembly sequence is more flexible, and it is possible to use the same assembly manner as the structure integrally formed, or to assemble the support rod 310 after the battery cells 200 are assembled. Moreover, the support rod 310 and the base 320 are easier to manufacture, which is beneficial to reduce production cost.

According to some embodiments of the present application, the support member 300 is made of a metal material, and an insulating layer is provided on a surface of the support member 300.

The support member 300 may be made of a metal material, including aluminum, iron, copper, aluminum, stainless steel, and aluminum alloy, which is not particularly limited in the embodiment of the present application.

The use of the metal material allows low cost, high structural strength and easy processing, and the insulating layer is arranged on the surface to prevent short circuit of the battery.

According to some embodiments of the present application, with reference to FIG. 11, in the first direction, the battery cell 200 includes end caps 220 at two ends, where a terminal post 230 is provided on the end cap 220, and the terminal posts 230 of adjacent battery cells 200 are connected in series.

The end cap 220 refers to a component that covers an opening of the shell 210 to isolate an internal environment of the battery cell 200 from an external environment. Without limitation, the end cap 220 may be shaped to adapt to the shape of the shell 210 so as to fit with the shell 210. Optionally, the end cap 220 may be made of a material (such as aluminum alloy) having hardness and strength to some extent, and a functional component such as the terminal post, which is configured to output or input electric energy of the battery cell 200, is provided on the end cap 220. The end cap 220 may be made of various materials, such as copper, iron, aluminum, stainless steel, aluminum alloy and plastic, which is not particularly limited in the embodiment of the present application. The terminal posts 230 of the battery cells 200 arranged in the first direction are connected in series.

The end cap 220 is made of a material having hardness and strength to some extent, and the end cap 220 is not prone to deformation when subjected to compression and collision, such that the battery cell 200 can have a higher structural strength, and safety performance can also be improved. A voltage of the battery is increased by connecting the battery cells 200 in series by means of the terminal posts 230.

According to the present application, the battery 10 includes the case 100, the battery cells 200 and the support member 300. Specifically, the accommodation space is formed inside the case 100, at least one row of battery cells 200 is provided, the at least one row of battery cells 200 is arranged in the accommodation space, each row of battery cells 200 includes at least two battery cells 200 electrically connected in the first direction, the support member 300 extends in the first direction, and two ends of the support member 300 are fixed to the case 100. The shell 210 of the battery cell 200 is cylindrical, and two or more rows of battery cells 200 are provided. In the second direction, the first gap 400 is formed between the shells 210 of two adjacent rows of battery cells 200, and the second gap 500 is formed between the shell 210 of the battery cell 200 and the side wall of the case 100. A plurality of support members 300 are provided, some of the support members 300 are arranged in the first gap 400, and the other support members 300 are arranged in the second gap 500.

According to the battery 10 of the embodiment of the present application, the support member 300 is arranged in the case 100 of the battery, and the extending direction of the support member 300 is the same as that of one row of battery cells 200, such that interference between the support member 300 and the battery cell 200 can be avoided. The two ends of the support member 300 are fixed to the case 100, and structural stiffness and structural strength of the case 100 can be improved by means of a supporting effect of the support member 300, thereby improving the anti-collision capability of the case 100, and reducing the risk of displacement or damage of the battery cell due to collision of the battery.

In addition, the shell 210 of the battery cell 200 in the embodiment of the present application is cylindrical, such that the battery cell 200 is a cylindrical battery. In order to increase the energy density of the battery 10, two or more rows of battery cells 200 can be provided in he height direction of the battery 10. In the case 100, the battery cells 200 are closely arranged, and since the shell 210 is cylindrical, the first gap 400 can be inevitably formed between an upper row and a lower row of battery cells 200, and the second gap 500 can be inevitably formed between the battery cell 200 and the case 100. Therefore, some of the support members 300 can be arranged in the first gap 400, while the other support members 300 can be arranged in the second gap 500. In this way, the energy density of the battery cannot be affected, and better support can further be provided for the case 100, thereby obviously improving the anti-collision performance of the case 100.

A second aspect of the present application provides a power consuming apparatus. The power consuming apparatus includes a battery in any of embodiments of the first aspect described above, where the battery is configured to supply electric energy to the power consuming apparatus.

According to the power consuming apparatus of an embodiment of the present application, the support member 300 is arranged in the case 100 of the battery 10 of the power consuming apparatus, and the extending direction of the support member 300 is the same as that of one row of battery cells 200, such that interference between the support member 300 and the battery cell 200 can be avoided. The two ends of the support member 300 are fixed to the case 100, and structural stiffness and structural strength of the case 100 can be improved by means of a supporting effect of the support member 300, thereby improving the anti-collision capability of the case 100, and reducing the risk of displacement or damage of the battery cell due to collision of the battery.

A third aspect of the present application provides a method for manufacturing a battery in any of embodiments of the first aspect described above. The method includes:
providing a case 100, an accommodation space being formed inside the case 100;
providing at least one row of battery cells 200, the at least one row of battery cells 200 being arranged in the accommodation space, and each row of battery cells 200 including at least two battery cells 200 arranged in a first direction; and
providing a support member 300, the support member 300 extending in the first direction, and two ends of the support member 300 are fixed to the case 100.

By means of the method for manufacturing a battery of an embodiment of the present application, the support member 300 is arranged in the case 100 of the battery 10 manufactured, and an extending direction of the support member 300 is the same as that of one row of battery cells 200, such that interference between the support member 300 and the battery cell 200 can be avoided. The two ends of the support member 300 are fixed to the case 100, and structural stiffness and structural strength of the case 100 can be improved by means of a supporting effect of the support member 300, thereby improving the anti-collision capability of the case 100, and reducing the risk of displacement or damage of the battery cell due to collision of the battery.

The present application is not limited to the specific embodiments disclosed herein but includes all the technical solutions that fall within the scope of the claims.

## Claims

1. A battery (10), comprising
a case (100), an accommodation space being formed inside the case (100);
at least one row of battery cells (200), the at least one row of battery cells (200) being arranged in the accommodation space, and each row of battery cells (200) comprising at least two battery cells (200) arranged opposite each other in a first direction; and
a support member (300), the support member (300) extending in the first direction, and two ends of the support member (300) being fixed to the case (100), the support member (300) comprises a support rod (310) and a base (320) located at an end of the support rod (310), wherein the base (320) is connected to the side wall of the case (100), **characterized in that** an adhesive surface is formed on the base (320), and the adhesive surface abuts against the side wall of the case (100) and is connected to the side wall by means of gluing.

2. The battery (10) according to claim 1, **characterized in that** a shell (210) of the battery cell (200) is cylindrical, and two or more rows of battery cells (200) are provided, wherein in a second direction, a first gap (400) is formed between the shells (210) of two adjacent rows of battery cells (200), and the support member (300) is arranged in the first gap (400).

3. The battery (10) according to claim 1, **characterized in that** a shell (210) of the battery cell (200) is cylindrical, a second gap (500) is formed between the shell (210) of the battery cell (200) and a side wall of the case (100), and the support member (300) is arranged in the second gap (500).

4. The battery (10) according to claim 1, **characterized in that** a shell (210) of the battery cell (200) is cylindrical, and two or more rows of battery cells (200) are provided, wherein in a second direction, a first gap (400) is formed between the shells (210) of two adjacent rows of battery cells (200), and a second gap (500) is formed between the shell (210) of the battery cell (200) and a side wall of the case (100), and wherein a plurality of support members (300) are provided, some of the support members (300) are arranged in the first gap (400), and the other support members (300) are arranged in the second gap (500).

5. The battery (10) according to claim 1, **characterized by** further comprising a separator (600), wherein two or more rows of battery cells (200) are provided, in a second direction, the separator (600) is arranged between two adjacent rows of battery cells (200), and in a third direction, the support members (300) are arranged at intervals on two sides of the separator (600).

6. The battery (10) according to claim 5, **characterized in that** in the third direction, the support member (300) is arranged between every three of the battery cells (200) on one side of the separator (600).

7. The battery (10) according to anyone of the preceding claims, **characterized in that** the support rod (310) is of a circular tube structure.

8. The battery (10) according to anyone of the preceding claims, **characterized in that** the support rod (310) and the base (320) are of a structure integrally formed, or the support rod (310) is detachably connected to the base (320).

9. The battery (10) according to any one of claims 1-8, **characterized in that** the support member (300) is made of a metal material, and an insulating layer is provided on a surface of the support member (300).

10. The battery (10) according to any one of claims 1-9, **characterized in that** in the first direction, the battery cell (200) comprises end caps (220) at two ends, wherein the end cap (220) comprises a terminal post (230), and the terminal posts (230) of the end caps (220) of adjacent battery cells (200) are connected in series.

11. A power consuming apparatus, **characterized by** comprising a battery (10) according to any one of claims 1-10.

12. A method for manufacturing a battery (10) according to anyone of claims 1 to 10, **characterized in that** the method comprises:
providing a case (100), an accommodation space being formed inside the case (100);
providing at least one row of battery cells (200), the at least one row of battery cells (200) being arranged in the accommodation space, and each row of battery cells (200) comprising at least two battery cells (200) arranged in a first direction; and
providing a support member (300), the support member (300) extending in the first direction, and two ends of the support member (300) being fixed to the case (100).

## Patentansprüche

1. Batterie (10), umfassend:
ein Gehäuse (100), wobei im Inneren des Gehäuses (100) ein Aufnahmeraum ausgebildet wird;
mindestens eine Reihe von Batteriezellen (200), wobei die mindestens eine Reihe von Batteriezellen (200) in dem Aufnahmeraum angeordnet ist und jede Reihe von Batteriezellen (200) mindestens zwei Batteriezellen (200) umfasst, die in einer ersten Richtung einander gegenüberliegend angeordnet sind; und
ein Stützelement (300), wobei sich das Stützelement (300) in der ersten Richtung erstreckt und zwei Enden des Stützelements (300) an dem Gehäuse (100) fixiert sind, wobei das Stützelement (300) eine Stützstange (310) und eine Basis (320) umfasst, die an einem Ende der Stützstange (310) angeordnet ist, wobei die Basis (320) mit der Seitenwand des Gehäuses (100) verbunden ist, **dadurch gekennzeichnet, dass** eine Klebefläche an der Basis (320) ausgebildet ist und die Klebefläche an der Seitenwand des Gehäuses (100) anliegt und mit der Seitenwand mittels Verkleben verbunden ist.

2. Batterie (10) nach Anspruch 1, **dadurch gekennzeichnet, dass** eine Hülle (210) der Batteriezelle (200) zylindrisch ist und zwei oder mehr Reihen von Batteriezellen (200) bereitgestellt sind, wobei in einer zweiten Richtung ein erster Spalt (400) zwischen den Hüllen (210) von zwei benachbarten Reihen von Batteriezellen (200) ausgebildet ist und das Stützelement (300) in dem ersten Spalt (400) angeordnet ist.

3. Batterie (10) nach Anspruch 1, **dadurch gekennzeichnet, dass** eine Hülle (210) der Batteriezelle (200) zylindrisch ist, ein zweiter Spalt (500) zwischen der Hülle (210) der Batteriezelle (200) und einer Seitenwand des Gehäuses (100) ausgebildet ist und das Stützelement (300) in dem zweiten Spalt (500) angeordnet ist.

4. Batterie (10) nach Anspruch 1, **dadurch gekennzeichnet, dass** eine Hülle (210) der Batteriezelle (200) zylindrisch ist und zwei oder mehr Reihen von Batteriezellen (200) bereitgestellt sind, wobei in einer zweiten Richtung ein erster Spalt (400) zwischen den Hüllen (210) von zwei benachbarten Reihen von Batteriezellen (200) ausgebildet ist und ein zweiter Spalt (500) zwischen der Hülle (210) der Batteriezelle (200) und einer Seitenwand des Gehäuses (100) ausgebildet ist und wobei eine Vielzahl von Stützelementen (300) bereitgestellt ist, wobei einige der Stützelemente (300) in dem ersten Spalt (400) angeordnet sind und die anderen Stützelemente (300) in dem zweiten Spalt (500) angeordnet sind.

5. Batterie (10) nach Anspruch 1, **dadurch gekennzeichnet, dass** sie ferner einen Separator (600) umfasst, wobei zwei oder mehr Reihen von Batteriezellen (200) bereitgestellt sind, der Separator (600) in einer zweiten Richtung zwischen zwei benachbarten Reihen von Batteriezellen (200) angeordnet ist und die Stützelemente (300) in einer dritten Richtung in Abständen auf zwei Seiten des Separators (600) angeordnet sind.

6. Batterie (10) nach Anspruch 5, **dadurch gekennzeichnet, dass** das Stützelement (300) in der dritten Richtung zwischen jeweils drei der Batteriezellen (200) auf einer Seite des Separators (600) angeordnet ist.

7. Batterie (10) nach einem beliebigen der vorhergehenden Ansprüche, **dadurch gekennzeichnet, dass** die Stützstange (310) eine kreisförmige Rohrstruktur ist.

8. Batterie (10) nach einem der vorhergehenden Ansprüche, **dadurch gekennzeichnet, dass** die Stützstange (310) und die Basis (320) eine einstückig ausgebildete Struktur sind oder die Stützstange (310) lösbar mit der Basis (320) verbunden ist.

9. Batterie (10) nach einem der Ansprüche 1-8, **dadurch gekennzeichnet, dass** das Stützelement (300) aus einem metallischen Material gebildet ist und eine Isolierschicht auf einer Oberfläche des Stützelements (300) bereitgestellt ist.

10. Batterie (10) nach einem der Ansprüche 1-9, **dadurch gekennzeichnet, dass** die Batteriezelle (200) in der ersten Richtung an zwei Enden Endkappen (220) umfasst, wobei die Endkappe (220) einen Anschlusspol (230) umfasst und die Anschlusspole (230) der Endkappen (220) benachbarter Batteriezellen (200) in Reihe geschaltet sind.

11. Leistungsverbrauchende Vorrichtung, **dadurch gekennzeichnet, dass** sie eine Batterie (10) nach einem der Ansprüche 1-10 umfasst.

12. Verfahren zum Herstellen einer Batterie (10) nach einem beliebigen der Ansprüche 1 bis 10, **dadurch gekennzeichnet, dass** das Verfahren folgendes umfasst:
ein Gehäuse (100), wobei im Inneren des Gehäuses (100) ein Aufnahmeraum ausgebildet wird;
mindestens eine Reihe von Batteriezellen (200), wobei die mindestens eine Reihe von Batteriezellen (200) in dem Aufnahmeraum angeordnet ist und jede Reihe von Batteriezellen (200) mindestens zwei Batteriezellen (200) umfasst, die in einer ersten Richtung angeordnet sind; und
Bereitstellen eines Stützelements (300), wobei sich das Stützelement (300) in der ersten Richtung erstreckt und zwei Enden des Stützelements (300) an dem Gehäuse (100) fixiert sind.

## Revendications

1. Batterie (10) comprenant :
un boîtier (100), un espace de logement étant formé à l'intérieur du boîtier (100) ;
au moins une rangée de cellules (200) de batterie, la ou les rangées de cellules (200) de batterie étant agencées dans l'espace de logement, et chaque rangée de cellules (200) de batterie comprenant au moins deux cellules (200) de batterie agencées à l'opposé l'une de l'autre dans une première direction ; et
un élément de support (300), l'élément de support (300) s'étendant dans la première direction, et deux extrémités de l'élément de support (300) étant fixées au boîtier (100), l'élément de support (300) comprenant une tige de support (310) et une base (320) située au niveau d'une extrémité de la tige de support (310), la base (320) étant reliée à la paroi latérale du boîtier (100), **caractérisée en ce qu'**une surface adhésive est formée sur la base (320), et la surface adhésive vient en butée contre la paroi latérale du boîtier (100) et est reliée à la paroi latérale au moyen d'un collage.

2. La batterie (10) selon la revendication 1, **caractérisée en ce qu'**une enveloppe (210) de la cellule (200) de batterie est cylindrique, et au moins deux rangées de cellules (200) de batterie sont prévues, et, dans une deuxième direction, un premier espacement (400) est formé entre les enveloppes (210) de deux rangées adjacentes de cellules (200) de batterie, et l'élément de support (300) est agencé dans le premier espacement (400).

3. La batterie (10) selon la revendication 1, **caractérisée en ce qu'**une enveloppe (210) de la cellule (200) de batterie est cylindrique, un second espacement (500) est formé entre l'enveloppe (210) de la cellule (200) de batterie et une paroi latérale du boîtier (100), et l'élément de support (300) est agencé dans le second espacement (500).

4. La batterie (10) selon la revendication 1, **caractérisée en ce qu'**une enveloppe (210) de la cellule (200) de batterie est cylindrique, et au moins deux rangées de cellules (200) de batterie sont prévues, et, dans une deuxième direction, un premier espacement (400) est formé entre les enveloppes (210) de deux rangées adjacentes de cellules (200) de batterie, et un second espacement (500) est formé entre l'enveloppe (210) de la cellule (200) de batterie et une paroi latérale du boîtier (100), et une pluralité d'éléments de support (300) est prévue, certains des éléments de support (300) étant agencés dans le premier espacement (400), et les autres éléments de support (300) étant agencés dans le second espacement (500).

5. La batterie (10) selon la revendication 1, **caractérisée en ce qu'**elle comprend en outre un séparateur (600), et au moins deux rangées de cellules (200) de batterie sont prévues, et, dans une deuxième direction, le séparateur (600) est agencé entre deux rangées adjacentes de cellules (200) de batterie et, dans une troisième direction, les éléments de support (300) sont agencés à intervalles sur deux côtés du séparateur (600).

6. La batterie (10) selon la revendication 5, **caractérisée en ce que**, dans la troisième direction, l'élément de support (300) est agencé entre chaque trois cellules (200) de batterie sur un côté du séparateur (600).

7. La batterie (10) selon l'une quelconque des revendications précédentes, **caractérisée en ce que** la tige de support (310) présente une structure tubulaire circulaire.

8. La batterie (10) selon l'une quelconque des revendications précédentes, **caractérisée en ce que** la tige de support (310) et la base (320) forment une structure en une seule pièce, ou bien la tige de support (310) est reliée détachable à la base (320).

9. La batterie (10) selon l'une quelconque des revendications 1-8, **caractérisée en ce que** l'élément de support (300) est constitué d'un matériau métallique, et une couche isolante est disposée sur une surface de l'élément de support (300).

10. La batterie (10) selon l'une quelconque des revendications 1-9, **caractérisée en ce que**, dans la première direction, la cellule (200) de batterie comprend des capuchons d'extrémité (220) au niveau de deux extrémités, le capuchon d'extrémité (220) comprend un pôle de borne (230), et les pôles de borne (230) des capuchons d'extrémité (220) de cellules (200) de batterie adjacentes sont connectés en série.

11. Appareil à consommation énergétique, **caractérisé en ce qu'**il comprend une batterie (10) selon l'une quelconque des revendications 1-10.

12. Procédé de fabrication d'une batterie (10) selon l'une quelconque des revendications 1 à 10, **caractérisé en ce que** le procédé comprend :
l'utilisation d'un boîtier (100), un espace de logement étant formé à l'intérieur du boîtier (100) ;
l'utilisation d'au moins une rangée de cellules (200) de batterie, la ou les rangées de cellules (200) de batterie étant agencées dans l'espace de logement, et chaque rangée de cellules (200) de batterie comprenant au moins deux cellules (200) de batterie agencées dans une première direction ; et
l'utilisation d'un élément de support (300), l'élément de support (300) s'étendant dans la première direction, et deux extrémités de l'élément de support (300) étant fixées au boîtier (100).
